# EUROPÄISCHE PATENTSCHRIFT

(11) **EP 1 902 921 B1**
(45) Veröffentlichungstag und Bekanntmachung des Hinweises auf die Patenterteilung: **12.10.2016**
(21) Anmeldenummer: 07016577.4
(22) Anmeldetag: 23.08.2007
(51) Int. Cl.: B60W 20/00, B60K 6/46, B60W 10/06, B60W 10/08

(54) **Flurförderzeug mit einem Verbrennungsmotor**
Industrial truck with a combustion engine
véhicule industriel doté d'un moteur à combustion

(30) Priorität: 20.09.2006 DE 102006044049; 14.11.2006 DE 102006053631
(43) Veröffentlichungstag der Anmeldung: 26.03.2008
(73) Patentinhaber: STILL GmbH, 22113 Hamburg (DE)
(72) Erfinder: Scheunemann, Patrick, 21037 Hamburg (DE)
(74) Vertreter: Geirhos, Johann

(56) Entgegenhaltungen:
- EP-A- 0 556 942
- EP-A- 1 013 498
- DE-A1- 4 321 767
- US-A- 5 345 154
- US-A- 5 461 289
- US-A1- 2005 274 555
- US-A1- 2006 020 383
- US-B1- 6 907 325

## Beschreibung

Die Erfindung betrifft ein Flurförderzeug mit mindestens einem Verbrennungsmotor, mindestens einer Vorrichtung zur Steuerung des Verbrennungsmotors, mindestens einem von dem Verbrennungsmotor angetriebenen Generator, mindestens einem elektrischen Antriebselement sowie mindestens einer Vorrichtung zur Steuerung des elektrischen Antriebselements. Die Erfindung betrifft ebenso ein Verfahren zum Betrieb eines derartigen Flurförderzeugs.

Für Flurförderzeuge ist eine Vielzahl verschiedener Antriebskonzepte bekannt. Weit verbreitet sind batteriebetriebene Fahrzeuge mit elektrischem Fahrantrieb sowie Fahrzeuge mit Verbrennungsmotor und hydrodynamischer, hydrostatischer oder elektrischer Kraftübertragung.

Elektromotorische Antriebe sind kostengünstig, als Drehstrom-Asynchronmotoren praktisch wartungsfrei und bieten insbesondere beim Einsatz als Fahrmotor große Vorteile bei der Regelung der Fahrgeschwindigkeit. Bei Flurförderzeugen ist dabei die so genannte geschwindigkeitsgeregelte Steuerung üblich, da dort, im Gegensatz beispielsweise zu Straßenkraftfahrzeugen, bei denen üblicherweise eine Leistungssteuerung des Antriebsmotors vorliegt, oder bei Baumaschinen, die häufig drehmomentgeregelt sind, zum präzisen Positionieren des Fahrzeugs, insbesondere auch an Steigungen, das genaue Einhalten der Fahrgeschwindigkeit oberste Priorität besitzt. Bei dieser Regelungsart wird üblicherweise aus der Differenz von Solldrehzahl und Istdrehzahl des elektrischen Fahrantriebsmotors das Drehmoment bestimmt, das zur Minimierung der Drehzahldifferenz nötig ist.

Aufgrund der guten Regeleigenschaften von Elektromotoren sowie der Möglichkeit, Bauteile batteriebetriebener Fahrzeuge zu verwenden, wird auch bei Flurförderzeugen mit Verbrennungsmotor häufig ein elektrischer Fahrantrieb verwendet. Dabei wird dann die Drehzahl des Verbrennungsmotors, beispielsweise anhand der Stellung des Fahrpedals, so eingestellt, dass der Verbrennungsmotor in jedem Fall genügend Leistung liefert, um die durch die Pedalstellung vorgegebene Fahrgeschwindigkeit mit der gewünschten Beschleunigung zu erreichen und danach auch zu halten. Gegenüber batteriebetriebenen Fahrzeugen ist dabei jedoch der hohe Geräuschpegel, insbesondere bei hohen Drehzahlen des Verbrennungsmotors, nachteilig. Hohe Drehzahlen sind zudem mit hohem Kraftstoffverbrauch und Abgasemissionen verbunden und führen zu erhöhtem Verschleiß des Verbrennungsmotors.

Aus der DE 43 21 767 A1 ist ein Verfahren zum Betreiben eines Flurförderzeugs bekannt, wobei das Flurförderzeug einen Motor sowie einen mit dem Motor verbundenen Generator aufweist und von elektrischen Antriebsmotoren angetrieben wird.

Aus der US 5,461,289 ist eine Antriebsanordnung mit einem Verbrennungsmotor, einem mit dem Verbrennungsmotor verbundenen Generator und zumindest einem Elektromotor bekannt, bei der die Belastung des Verbrennungsmotors erfasst wird.

Aus der EP 1 013 498 A2 ist ein Leistungssteuerungssystem für ein Hybridfahrzeug bekannt.

Aus der US 2006/0020383 A1, der als nächstliegender Stand der Technik betrachtet wird, und der US 2005/0274555 A1 sind Systeme zur Steuerung eines elektrischen Fahrantriebs sowie eines Verbrennungsmotors bekannt.

Der Erfindung liegt daher die Aufgabe zugrunde, ein Flurförderzeug mit mindestens einem Verbrennungsmotor, mindestens einer Vorrichtung zur Steuerung des Verbrennungsmotors, mindestens einem von dem Verbrennungsmotor angetriebenen Generator, mindestens einem elektrischen Antriebselement sowie mindestens einer Vorrichtung zur Steuerung des elektrischen Antriebselements sowie ein Verfahren zum Betrieb eines derartigen Fahrzeugs zu schaffen. bei dem unnötig hohe Drehzahlen des Verbrennungsmotors zuverlässig vermieden werden.

Diese Aufgabe wird bezüglich des Flurförderzeugs erfingdungsgemäß dadurch gelöst, dass mindestens eine Vorrichtung die Belastung des Verbrennungsmotors erfasst und ein Mittel die Solldrehzahl des Verbrennungsmotors aus der erfassten Last und der Solllast des Verbrennungsmotors sowie der tatsächlichen und der benötigten Drehzahl des Fahrantriebs berechnet. Indem die Belastung des Verbrennungsmotors erfasst wird, ist ersichtlich, ob die bei der augenblicklichen Drehzahl abgenommene Leistung der bei dieser Drehzahl maximal möglichen Leistung entspricht. Diese Information kann als Grundlage von Maßnahmen zur Optimierung des Betriebs, insbesondere von Verbrauch, Geräuschpegel oder Verschleiß verwendet werden. Beispielsweise wird ersichtlich ob der Verbrennungsmotor bei der augenblicklichen Drehzahl ausgelastet ist, zusätzliche Leistung abgenommen werden kann oder die Möglichkeit zur Drehzahlreduzierung besteht, d.h. die Drehzahl des Motors soweit abgesenkt werden kann, dass die entnommene Leistung annähernd der bei der gewählten Drehzahl maximal entnehmbaren Leistung entspricht. Diese Information kann sowohl an eine Bedienperson weitergegeben als auch zur automatischen Optimierung des Betriebs verwendet werden. Die Regelreserve und die Dynamik des Verbrennungsmotors wird dadurch verbessert, dass ein Mittel die Solldrehzahl des Verbrennungsmotors aus der erfassten Last und der Solllast des Verbrennungsmotors sowie der tatsächlichen und der benötigten Drehzahl des Fahrantriebs berechnet.

Zweckmäßigerweise sind Mittel zum Vergleich von erfasster Belastung des Verbrennungsmotors und Solllast des Verbrennungsmotors vorgesehen. Die Solllast ist dabei die Belastung des Verbrennungsmotors bei gegebener Drehzahl, die sich ergibt, wenn der Verbrennungsmotor die augenblicklich zum Betrieb des Fahrzeugs erforderliche Leistung erbringt. Durch Vergleich von Solllast und tatsächlicher Belastung kann ermittelt werden, ob die vom Verbrennungsmotor verlangte Leistung erbracht werden kann, ob der Verbrennungsmotor eine für die geforderte Leistung zu hohe Drehzahl aufweist oder ob sich verlangte und gelieferte Leistung decken. Ausgehend von dieser Information kann die Drehzahl des Verbrennungsmotors für die zu erbringende Leistung optimal eingestellt werden.

Es ist zweckmäßig, wenn die Mittel zur Erfassung der Last des Verbrennungsmotors mindestens ein Mittel zur Erfassung der Motordrehzahl und/oder des Motordrehmoments umfassen. Diese Kenngrößen können beispielsweise über Sensoren leicht ermittelt werden und werden häufig für Funktionen eines Motorsteuergeräts benötigt, weshalb ihre Ermittlung bei Verbrennungsmotoren nach dem Stand der Technik häufig ohnehin vorgesehen ist.

Es ist zweckmäßig, wenn das elektrische Antriebselement als Elektromotor, vorzugsweise als Drehstrom-Asynchronmotor, ausgebildet ist. Elektromotoren, insbesondere Drehstrom-Asynchronmotoren, sind einfach in Herstellung und Wartung und weisen ein niedriges Geräuschniveau sowie ein gutes Regelverhalten auf.

Weiterhin ist es von Vorteil, wenn die Mittel zur Erfassung der Belastung des Verbrennungsmotors mindestens ein Mittel zur Erfassung von Leistungsdaten des elektrischen Antriebselements, vorzugsweise zur Erfassung von Kenngrößen eines Elektromotors, umfassen. Indem die Leistungsdaten des elektrischen Antriebselements als wesentlichem Empfänger der vom Verbrennungsmotor gelieferten Leistung bekannt sind, kann daraus die Belastung des Verbrennungsmotors ermittelt werden. Kenngrößen für die Leistung können beispielsweise bei Drehstrom-Asynchronmotoren das im Umrichter bestimmte Motordrehmoment und die Motordrehzahl sein, ebenso aber auch zur Bestimmung dieser Kenngrößen geeignete andere Parameter nach dem Stand der Technik.

Es ist ebenfalls zweckmäßig, wenn der Elektromotor Bestandteil eines Fahrantriebs ist. Bei einem Fahrantrieb eines Flurförderzeugs kommen die Vorteile eines Elektromotors besonders gut zum Tragen.

Es ist vorteilhaft, wenn mindestens eine Vorrichtung zur Erfassung der Drehzahl des Fahrantriebs vorgesehen ist. Dadurch kann die Fahrgeschwindigkeit des Fahrzeugs überwacht werden.

Vorteilhafterweise ist die Vorrichtung zur Erfassung der Drehzahl des Fahrantriebs als Vorrichtung zur Erfassung der Drehzahl des Elektromotors ausgebildet. Vorrichtungen zur Erfassung der Drehzahl des Elektromotors sind häufig bereits vorgesehen, da die Drehzahl der Steuerung des Elektromotors als wichtige Eingangsgröße dient. Der Zusammenhang zwischen Drehzahl des Fahrantriebs und Drehzahl des Elektromotors ist vorgegeben und bei Verwendung keiner oder einer starren Übersetzung auch im Betrieb nicht veränderlich.

Es ist weiterhin vorteilhaft, wenn Mittel zum Vergleich von erfasster und benötigter Drehzahl des Fahrantriebs vorgesehen sind. Damit kann gegebenenfalls eine Differenz zwischen gewünschter und tatsächlicher Geschwindigkeit ermittelt werden. Dies ermöglicht die Bestimmung der benötigten Leistung und damit der benötigten Drehzahl des Verbrennungsmotors, um die gewünschte Fahrgeschwindigkeit zu erreichen.

Indem Mittel zur Festlegung von Grenzwerten für die Solldrehzahl des Verbrennungsmotors in Abhängigkeit von der tatsächlichen und/oder der benötigten Drehzahl des Fahrantriebs vorgesehen sind, kann die Lastanpassung des Verbrennungsmotors optimiert werden, beispielsweise indem bei höheren Fahrgeschwindigkeiten, die typischerweise einen höheren Leistungsbedarf erwarten lassen, eine Voranpassung an diesen Leistungsbedarf vorgenommen wird.

Bezüglich des Verfahrens wird die Aufgabe erfindungsgemäß dadurch gelöst, dass die Istlast des Verbrennungsmotors ermittelt, mit der Solllast verglichen und eine Kenngröße V für die Abweichung berechnet wird. Die Vergleichsgröße für die Abweichung von Solllast und tatsächlicher Belastung dient als Regelgröße, nach der die tatsächlich erbrachte Last an die zu erbringende Solllast angepasst werden kann. Ausgehend von dieser Größe kann die Drehzahl des Verbrennungsmotors für die zu erbringende Leistung optimal eingestellt werden.

Es ist besonders vorteilhaft, wenn die Drehzahl des Fahrantriebsmotors ermittelt, mit der von der Steuerung des Fahrantriebsmotors vorgegebenen Drehzahl verglichen und eine Kenngröße E für die Abweichung berechnet wird. Die Vergleichsgröße E für die am Fahrantrieb gewünschte und die gelieferte Leistung gibt ein Maß für die benötigte Leistung und dient damit als Regelgröße für die Solllast des Verbrennungsmotors.

Es ist ebenfalls vorteilhaft, wenn aus der Kenngröße V und der Kenngröße E eine einzige Kenngröße X berechnet wird. Dadurch wird der Zustand des Antriebssystems in einer einzigen Kenngröße wiedergegeben, was die Regelung des Systems erleichtert.

In einer zweckmäßigen Weiterbildung der Erfindung wird die Kenngröße X gebildet, indem die Kenngröße V und die Kenngröße E jeweils mit einem geeigneten Gewichtungsfaktor multipliziert und anschließend die Differenz der so entstandenen Größen berechnet wird. Die Gewichtungsfaktoren ermöglichen eine optimale Anpassung an die Gegebenheiten des Antriebs, insbesondere an die unterschiedliche Charakteristik von Elektromotor und Verbrennungsmotor.

Weiterhin ist es vorteilhaft, wenn die aus den Kenngrößen V und E gebildete Kenngröße X als Regelgröße für die Drehzahl des Verbrennungsmotors, insbesondere bei einer Berechung nach dem PID-Algorithmus, verwendet wird. Die Kenngröße X ist besonders gut geeignet, um die Drehzahl des Verbrennungsmotors zu regeln, da diese den Zustand des Antriebssystems sehr gut wiedergibt.

Es ist ebenfalls vorteilhaft, wenn anhand der tatsächlichen und/oder der benötigten Drehzahl des Fahrantriebs mindestens ein oberer Grenzwert sowie mindestens ein unterer Grenzwert für die Solldrehzahl des Verbrennungsmotors festgelegt werden. Dadurch kann die Lastanpassung des Verbrennungsmotors bei wechselnden Bedingungen optimiert werden, beispielsweise indem bei höheren Fahrgeschwindigkeiten, die typischerweise einen höheren Leistungsbedarf erwarten lassen, eine Voranpassung an diesen Leistungsbedarf vorgenommen wird.

Weitere Vorteile und Einzelheiten der Erfindung werden im Folgenden anhand des in der Zeichnung dargestellten Ausführungsbeispiels näher erläutert. Gleiche beziehungsweise funktional gleiche Teile sind mit gleichen Bezugszeichen gekennzeichnet. Dabei zeigt
- Figur 1: den schematischen Aufbau eines erfindungsgemäßen Flurförderzeugs,
- Figur 2: den schematischen Aufbau einer Schaltung zur Durchführung des erfindungsgemäßen Verfahrens (Bild 3),
- Figur 3: den schematischen Aufbau einer weiteren Schaltung zur Durchführung des erfindungsgemäßen Verfahrens.

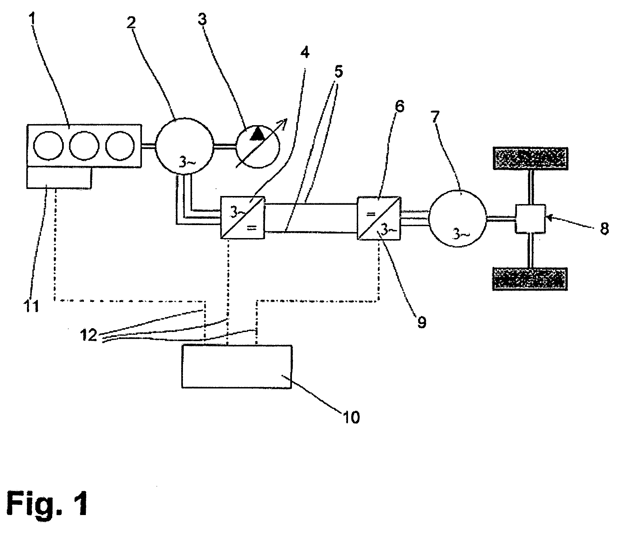

In Figur 1 ist schematisch der Aufbau eines erfindungsgemäßen Flurförderzeugs gezeigt. Auf die Darstellung von Aggregaten und Komponenten, wie beispielsweise Teile der hydraulischen oder elektrischen Anlage, die zum Verständnis der Erfindung nicht erforderlich sind, wurde weitgehend verzichtet. Ein Verbrennungsmotor 1 treibt einen Generator 2 sowie eine Hydraulikpumpe 3 an. Die Hydraulikpumpe 3 ist mit einem hier nicht dargestellten Hydraulikkreis verbunden, der beispielsweise Hub- und/oder Neigezylinder für einen Hubmast umfassen kann. Der Generator 2 ist im vorliegenden Ausführungsbeispiel als dreiphasiger Synchrongenerator ausgeführt und steht mit einem Gleichrichter 4 in Verbindung. Über einen Gleichstrom- bzw. Gleichspannungszwischenkreis 5 ist ein Fahrumrichter 6 angeschlossen, der wiederum einen als Drehstrom-Asynchronmotor ausgebildeten Fahrmotor 7 mit Strom versorgt. Der Fahrmotor 7 bildet mit einer Antriebsachse 8a den Fahrantrieb 8 des Flurförderzeugs. Im Fahrumrichter 6 integriert ist eine elektrische Steuerung 9, die die Drehzahl des Fahrmotors 7 entsprechend der Geschwindigkeitsvorgaben einer Steuereinheit 10 regelt. Die Steuereinheit 10 steht mit der Steuerung 11 des Verbrennungsmotors 1, dem Gleichrichter 4 sowie dem Umrichter 6 über Datenleitungen 12 in Verbindung, wobei der Datenaustausch beispielsweise nach dem CAN-Bus-Standard erfolgen kann.

Die Steuereinheit 10 erhält über hier nicht dargestellte Bedienelemente, wie beispielsweise ein Fahr- und/oder Bremspedal Vorgaben für die Fahrgeschwindigkeit des Fahrzeugs. Es ist bei Flurförderzeugen üblich, die so genannte geschwindigkeitsgeregelte Steuerung zu verwenden, da zum präzisen Positionieren des Fahrzeugs, insbesondere auch an Steigungen, das genaue Einhalten der Fahrgeschwindigkeit oberste Priorität besitzt. Bei dieser Regelungsart wird üblicherweise aus der Differenz von Solldrehzahl und Istdrehzahl des elektrischen Fahrantriebsmotors 7 das Drehmoment bestimmt, das zur Minimierung der Drehzahldifferenz nötig ist. Zusätzlich erhält die Steuereinheit 10 Informationen über den Leistungsbedarf des Hydraulikkreises, der vorrangig vor dem Fahrantrieb 8 gedeckt wird. Die Steuereinheit 10 enthält im gezeigten Ausführungsbeispiel auch die wesentlichen Vorrichtungen zur Realisierung der Erfindung.

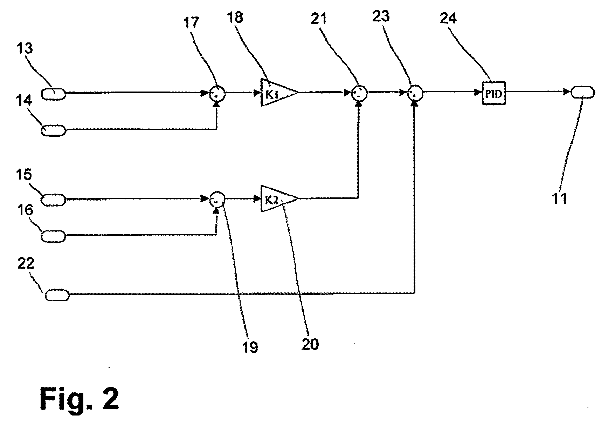

Figur 2 zeigt den schematischen Aufbau einer Schaltung zur Durchführung eines erfindungsgemäßen Verfahrens. Es sind eine erfindungsgemäße Vorrichtung 13 zur Erfassung der Belastung des Verbrennungsmotors 1, eine Vorrichtung 14 zur Ermittlung der Solllast des Verbrennungsmotors 1, eine Vorrichtung 15 zur Erfassung der Drehzahl des Elektromotors 7 sowie eine Vorrichtung 16 zur Vorgabe der Drehzahl des Elektromotors 7 vorgesehen.

Die Vorrichtung 13 zur Erfassung der Belastung des Verbrennungsmotors 1 ist im vorliegenden Ausführungsbeispiel in die Steuerung 11 des Verbrennungsmotors 1 integriert und umfasst im Wesentlichen einen Sensor zur Erfassung der Motordrehzahl sowie Mittel zur Erfassung der Menge des eingespritzten Kraftstoffs.

Die Vorrichtung 15 zur Erfassung der Drehzahl des Elektromotors 7 ist im vorliegenden Ausführungsbeispiel ein im Elektromotor 7 selbst verbauter Sensor, kann aber, wenn die Übersetzung zwischen Elektromotor 7 und Antriebsrad bekannt ist, ein Fahrgeschwindigkeitssensor sein.

Die Vorrichtung 16 zur Vorgabe der Drehzahl des Elektromotors 7 ist in der Steuerung 9 des Elektromotors 7 integriert. Ein an einem Fahrpedal angebrachter Signalgeber gibt die Fahrpedalstellung an die Steuereinheit 10 weiter, wobei diese der Fahrpedalstellung eine bestimmte Wunschgeschwindigkeit und damit bei bekannter Übersetzung zwischen Elektromotor 7 und Antriebsrad auch eine Solldrehzahl des Elektromotors 7 und die zur Erreichung der Solldrehzahl notwendige Leistung vorgibt.

Die Solllast des Verbrennungsmotors 1 ergibt sich aus den Leistungsanforderungen durch den Generator 2 sowie die Hydraulikpumpe 3, die in Relation zur bei gegebener Drehzahl maximalen Leistung des Verbrennungsmotors 1 gesetzt werden.

In einer ersten Subtraktionsvorrichtung 17 wird die von der Vorrichtung 14 zur Ermittlung der Solllast des Verbrennungsmotors 1 ermittelte Solllast von der mittels der Vorrichtung 13 zur Erfassung der Belastung des Verbrennungsmotors 1 ermittelten Istlast subtrahiert und der in diesem Vergleich erhaltene Wert anschließend an eine erste Multiplikationsvorrichtung 18 übermittelt, die diesen mit einem Anpassungsfaktor K1 multipliziert und so eine erste Regelgröße V ermittelt. Der Anpassungsfaktor K1 ist vorgegeben und wurde empirisch für die jeweilige Antriebseinheit ermittelt. In einer zweiten Subtraktionsvorrichtung 19 wird die von der Vorrichtung 15 zur Erfassung der Drehzahl des Elektromotors 7 erfasste tatsächliche Drehzahl mit der Solldrehzahl verglichen und der erhaltene Wert an eine zweite Multiplikationsvorrichtung 20 übermittelt, wo er mit einem weiteren Anpassungsfaktor K2 multipliziert wird, um so eine zweite Regelgröße E zu berechnen.

Die Regelgrößen E und V werden an eine Subtraktionsvorrichtung 21 übermittelt, dort voneinander subtrahiert und so eine kombinierte Regelgröße X ermittelt, die die Abweichung der Antriebseinrichtung vom Sollzustand charakterisiert.

Durch Vergleich der Kenngröße X mit einem in einer Speichervorrichtung 22 vorgehaltenen Sollwert W in einer vierten Subtraktionsvorrichtung 23 wird ein Eingangswert für einen PID-Regler 24 erzeugt, in dem danach die Solldrehzahl des Verbrennungsmotors 1 berechnet und an die Steuerung 11 des Verbrennungsmotors 1 übermittelt wird. Der Sollwert W ist üblicherweise gleich Null, da bei einem ideal eingestellten Antrieb sowohl Solllast und tatsächliche Last des Verbrennungsmotors 1 als auch Solldrehzahl und tatsächliche Drehzahl des Elektromotors 7 jeweils übereinstimmen.

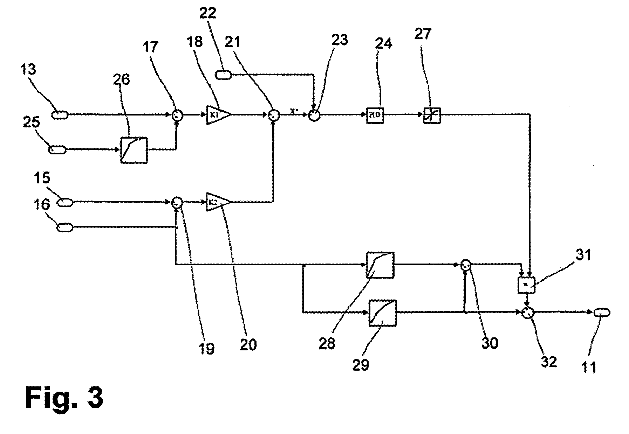

Eine Weiterbildung der Erfindung ist in Figur 3 gezeigt. Es sind eine erfindungsgemäße Vorrichtung 13 zur Erfassung der Belastung des Verbrennungsmotors 1, eine Vorrichtung 25 zur Ermittlung der Istdrehzahl des Verbrennungsmotors 1, eine Vorrichtung 15 zur Erfassung der Drehzahl des Elektromotors 7 sowie eine Vorrichtung 16 zur Vorgabe der Drehzahl des Elektromotors 7 vorgesehen. Bei dieser Ausbildung der Erfindung wird die Solllast des Verbrennungsmotors 1 in einer Berechnungsvorrichtung 26 mittels einer in der Steuerung 11 des Verbrennungsmotors 1 abgelegten Kennlinie aus der Ist-Drehzahl des Verbrennungsmotors 1 ermittelt. Die Berechnung erfolgt, indem bei gegebener Drehzahl, die eine bei dieser Drehzahl maximal mögliche Leistung des Verbrennungsmotors 1 vorgibt, anhand des in der Motorsteuerung 11 des Verbrennungsmotors 1 abgelegten Kennfeldes derjenige Betriebszustand ermittelt wird, bei dem diese Leistung mit minimalem Verbrauch erbracht werden kann. Die für diesen Betriebszustand ermittelte Last wird als Solllast für das weitere Verfahren verwendet. Es sind jedoch auch andere Berechnungsmethoden für die Solllast des Verbrennungsmotors 1 denkbar, in die die Istdrehzahl des Verbrennungsmotors 1 einbezogen wird, so kann beispielsweise insbesondere anstelle einer verbrauchsoptimierten eine drehmomentoptimierte Einstellung der Solllast erfolgen.

In einer ersten Subtraktionsvorrichtung 17 wird die ermittelte Last des Verbrennungsmotors 1 von der Solllast abgezogen, der erhaltene Wert mittels einer ersten Multiplikationsvorrichtung 18 mit einem Anpassungsfaktor K1 gewichtet und so die Kenngröße V generiert. Ebenso wie im vorhergehenden Ausführungsbeispiel werden auch Soll- und Istdrehzahl des elektrischen Fahrmotors 7 in einer zweiten Subtraktionsvorrichtung 19 sowie einer zweiten Multiplikationsvorrichtung 20 zu einer Kenngröße E aufbereitet. Die Kenngrößen E und V werden in einer Subtraktionsvorrichtung 21 zu der kombinierten Regelgröße X kombiniert und dann in einer dritten Subtraktionsvorrichtung 23 mit dem in der Speichervorrichtung 22 vorgehaltenen Sollwert W vergleichen. Der erhaltene Wert wird als Eingangswert in einen PID-Regler 24 gespeist, in dem ein dimensionsloser Sollwert L für die Last generiert und in einem Begrenzer 27 bei Überschreiten eines oberen oder unteren Grenzwertes auf diesen Grenzwert gesetzt wird. Im vorliegenden Ausführungsbeispiel ist als oberer beziehungsweise unterer Grenzwert 0 beziehungsweise 1 definiert, es sind jedoch auch Anwendungsfälle mit anderen Grenzwerten denkbar.

Aus der Solldrehzahl des Elektromotors 7 wird in einer ersten Berechnungsvorrichtung 28 anhand einer dort abgelegten Kennlinie eine Obergrenze und in einer zweiten Berechnungsvorrichtung 29 anhand einer weiteren Kennlinie eine Untergrenze für die Solldrehzahl des Verbrennungsmotors 1 ermittelt. In einer weiteren Subtraktionsvorrichtung 30 wird der untere Grenzwert vom oberen Grenzwert abgezogen und die Differenz in einer Multiplikationsvorrichtung 31 mit dem Wert L multipliziert. In einer Additionsvorrichtung 32 wird der so berechnete Wert zu dem unteren Grenzwert addiert und so die Solldrehzahl des Verbrennungsmotors 1 berechnet und an die Steuerung 11 des Verbrennungsmotors 1 übermittelt.

Die in Figur 3 beschriebene Vorrichtung und das damit durchgeführte Verfahren weisen gegenüber der einfachen Ausführungsform, die in Figur 2 schematisch dargestellt wurde, eine Reihe von Vorteilen auf. Indem die Solllast des Verbrennungsmotors 1 mithilfe der ermittelten Drehzahl des Verbrennungsmotors 1 vorgegeben wird, ist es möglich, bei geringen Drehzahlen eine kleinere Solllast vorzugeben und damit eine höhere Regelreserve und Dynamik des Verbrennungsmotors 1 zu erreichen. Die Vorgabe von Grenzwerten für die Solldrehzahl des Verbrennungsmotors innerhalb von anhand der Drehzahl des Fahrmotors ermittelten Grenzwerten ermöglicht es beispielsweise, eine Voranpassung der Drehzahl an den bei höheren Fahrgeschwindigkeiten typischerweise steigenden Leistungsbedarf vorzunehmen.

Im Ausführungsbeispiel wurde die Erfindung für den Fall der Vorwärtsfahrt des Flurförderzeugs erläutert. Bei Rückwärtsfahrt wird die negative Solldrehzahl des Fahrantriebsmotors 7 durch eine Vorzeichenanpassung berücksichtigt.

Selbstverständlich sind auch andere Ausführungsformen der Erfindung denkbar. So können beispielsweise die einzelnen Komponenten, die zur Ermittlung und/oder Auswertung der Kenngrößen für Elektromotor 7 und Verbrennungsmotor 1 dienen, entweder als diskrete Bausteine vorgesehen oder in einer eigenständigen Baugruppe integriert sein. Auch eine Verteilung diese Komponenten auf die Steuerung 9 des Elektromotors 7, die Steuerung 11 des Verbrennungsmotors 1 oder die Steuerungseinheit 10 ist denkbar. Die Ermittlung der Belastung des Verbrennungsmotors 1 kann außer über die Drehzahl des Verbrennungsmotors 1 und die Einspritzmenge je nach Bauweise des Verbrennungsmotors 1 und der Steuerung 11 auch über andere Kenngrößen erfolgen, insbesondere auch, indem die Leistungswerte der Verbraucher in geeigneten Vorrichtungen erfasst und aufsummiert werden.

Selbstverständlich sind auch Ausführungsformen denkbar, bei denen das elektrische Antriebselement nicht als Fahrmotor sondern beispielsweise als Antrieb für andere Aggregate oder Funktionen des Flurförderzeugs oder als Stellmotor ausgebildet ist. Auch weitere elektrische Verbraucher könne in das System einbezogen und die von Ihnen geforderte Leistung berücksichtigt werden. Ebenso ist die Verwendung in einem Fahrzeug mit einem Hybridantrieb denkbar, bei dem beispielsweise im Stromkreis 5 noch eine Batterie oder ein Kondensator vorgesehen ist, um beispielsweise Leistungsspitzen abzumildern oder rein elektrischen Betrieb in Gebäuden zu ermöglichen.

## Patentansprüche

1. Flurförderzeug mit mindestens einem Verbrennungsmotor (1), mindestens einer Vorrichtung (11), die den Verbrennungsmotor steuert, mindestens einem von dem Verbrennungsmotor (1) angetriebenen Generator (2), mindestens einem elektrischen Antriebselement (7) sowie mindestens einer Vorrichtung (9), die das elektrische Antriebselement steuert,
wobei mindestens eine Vorrichtung (13) die Belastung des Verbrennungsmotors (1) erfasst,
**dadurch gekennzeichnet, dass** ein Mittel (24) die Solldrehzahl des Verbrennungsmotors (1) aus der erfassten Last und der Solllast des Verbrennungsmotors (1) sowie der tatsächlichen und der benötigten Drehzahl des Fahrantriebs (8) berechnet.

2. Flurförderzeug nach Anspruch 1, **dadurch gekennzeichnet, dass** Mittel (17) zum Vergleich der erfassten Belastung des Verbrennungsmotors (1) und der Solllast des Verbrennungsmotors (1) vorgesehen sind.

3. Flurförderzeug nach Anspruch 1 oder 2, **dadurch gekennzeichnet, dass** die Mittel (13) zur Erfassung der Belastung des Verbrennungsmotors (1) mindestens ein Mittel zur Erfassung der Motordrehzahl und/oder des Motordrehmoments umfassen.

4. Flurförderzeug nach einem der Ansprüche 1 bis 3, **dadurch gekennzeichnet, dass** das elektrische Antriebselement (7) als Elektromotor, vorzugsweise als Drehstrom-Asynchronmotor (7) ausgebildet ist.

5. Flurförderzeug nach einem der Ansprüche 1 bis 4, **dadurch gekennzeichnet, dass** die Mittel (13) zur Erfassung der Belastung des Verbrennungsmotors (1) mindestens ein Mittel zur Erfassung von Leistungsdaten des elektrischen Antriebselements, vorzugsweise zur Erfassung von Kenngrößen eines Elektromotors (7), umfassen.

6. Flurförderzeug nach einem der Ansprüche 1 bis 5, **dadurch gekennzeichnet, dass** der Elektromotor (7) Bestandteil eines Fahrantriebs (8) ist.

7. Flurförderzeug nach einem der Ansprüche 1 bis 6, **dadurch gekennzeichnet, dass** mindestens eine Vorrichtung (15) zur Erfassung der Drehzahl des Fahrantriebs (8) vorgesehen ist.

8. Flurförderzeug nach Anspruch 7, **dadurch gekennzeichnet, dass** die Vorrichtung (15) zur Erfassung der Drehzahl des Fahrantriebs (8) als Vorrichtung (15) zur Erfassung der Drehzahl des Elektromotors (7) ausgebildet ist.

9. Flurförderzeug nach einem der Ansprüche 1 bis 8, **dadurch gekennzeichnet, dass** Mittel (19) zum Vergleich von erfasster und benötigter Drehzahl des Fahrantriebs (8) vorgesehen sind.

10. Flurförderzeug nach einem der Ansprüche 1 bis 9, **dadurch gekennzeichnet, dass** Mittel zur Festlegung von Grenzwerten für die Solldrehzahl des Verbrennungsmotors in Abhängigkeit von der tatsächlichen und/oder der benötigten Drehzahl des Fahrantriebs (8) vorgesehen sind.

11. Verfahren zum Betrieb eines Flurförderzeugs, das die Merkmale eines der Ansprüche 1 bis 10 aufweist,
**dadurch gekennzeichnet,**
**dass** die Istlast des Verbrennungsmotors (1) ermittelt, mit der Solllast verglichen und eine Kenngröße V für die Abweichung berechnet wird.

12. Verfahren nach Anspruch 11, **dadurch gekennzeichnet, dass** die Drehzahl des Fahrantriebsmotors (7) ermittelt, mit der von der Steuerung (9) des Fahrantriebsmotors (7) vorgegebenen Drehzahl verglichen und eine Kenngröße E für die Abweichung berechnet wird.

13. Verfahren nach Anspruch 12, **dadurch gekennzeichnet, dass** aus der Kenngröße V und der Kenngröße E eine einzige Kenngröße X berechnet wird.

14. Verfahren nach Anspruch 13, **dadurch gekennzeichnet, dass** die Kenngröße X gebildet wird, indem die Kenngröße V und die Kenngröße E jeweils mit einem geeigneten Gewichtungsfaktor multipliziert und anschließend die Differenz der so entstandenen Größen berechnet wird.

15. Verfahren nach Anspruch 13 oder 14, **dadurch gekennzeichnet, dass** die aus den Kenngrößen V und E gebildete Kenngröße X als Regelgröße für die Drehzahl des Verbrennungsmotors (1), insbesondere bei einer Berechung nach dem PID-Algorithmus, verwendet wird.

16. Verfahren nach einem der Ansprüche 11 bis 15, **dadurch gekennzeichnet, dass** anhand der tatsächlichen und/oder der benötigten Drehzahl des Fahrantriebs (8) mindestens ein oberer Grenzwert sowie mindestens ein unterer Grenzwert für die Solldrehzahl des Verbrennungsmotors (1) festgelegt werden.

## Claims

1. Industrial truck having at least one combustion engine (1), at least one device (11) which controls the combustion engine, at least one generator (2) which is driven by the combustion engine (1), at least one electric drive element (7) and at least one device (9) which controls the electric drive element,
wherein at least one device (13) senses the load acting on the combustion engine (1),
**characterized in that**
a means (24) calculates a set point rotational speed of the combustion engine (1) from the acquired load and the set point load acting on the combustion engine (1) and the actual and required rotational speed of the traction drive (8).

2. Industrial truck according to Claim 1, **characterized in that** means (17) are provided for comparing the acquired load acting on the combustion engine (1) and the set point load acting on the combustion engine (1).

3. Industrial truck according to Claim 1 or 2, **characterized in that** the means (13) for acquiring the load acting on the combustion engine (1) comprise at least one means for acquiring the rotational speed of the engine and/or the torque of the engine.

4. Industrial truck according to one of Claims 1 to 3, **characterized in that** the electric drive element (7) is embodied as an electric motor, preferably as a three-phase asynchronous motor (7).

5. Industrial truck according to one of Claims 1 to 4, **characterized in that** the means (13) for acquiring the load acting on the combustion engine (1) comprise at least one means for acquiring power data of the electric drive element, preferably for acquiring characteristic variables of an electric motor (7).

6. Industrial truck according to one of Claims 1 to 5, **characterized in that** the electric motor (7) is a component of a traction drive (8).

7. Industrial truck according to one of Claims 1 to 6, **characterized in that** at least one device (15) is provided for acquiring the rotational speed of the traction drive (8).

8. Industrial truck according to Claim 7, **characterized in that** the device (15) for acquiring the rotational speed of the traction drive (8) is embodied as a device (15) for acquiring the rotational speed of the electric motor (7).

9. Industrial truck according to one of Claims 1 to 8, **characterized in that** means (19) are provided for comparing the acquired rotational speed of the traction drive (8) and the required rotational speed of the traction drive (8).

10. Industrial truck according to one of Claims 1 to 9, **characterized in that** means for defining limiting values for the setpoint rotational speed of the internal combustion engine are provided as a function of the actual rotational speed of the traction drive (8) and/or of the required rotational speed of the traction drive (8).

11. Method for operating an industrial truck which has the features of one of Claims 1 to 10,
**characterized**
**in that** the actual load acting on the internal combustion engine (1) is determined and is compared with the setpoint load, and a characteristic variable (V) for the deviation is calculated.

12. Method according to Claim 11, **characterized in that** the rotational speed of the traction drive motor (7) is determined and is compared with the rotational speed predefined by the controller (9) of the traction drive motor (7), and a characteristic variable (E) for the deviation is calculated.

13. Method according to Claim 12, **characterized in that** a single characteristic variable X is calculated from the characteristic variable V and the characteristic variable E.

14. Method according to Claim 13, **characterized in that** the characteristic variable X is formed by multiplying the characteristic variable V and the characteristic variable E each by a weighted weighting factor and subsequently calculating the difference between the variables which have come about in this way.

15. Method according to Claim 13 or 14, **characterized in that** the characteristic variable X which is formed from the characteristic variables V and E is used as a controlled variable for the rotational speed of the internal combustion engine (1), in particular during a calculation according to the PiD algorithm.

16. Method according to one of Claims 11 to 15, **characterized in that** at least one upper limiting value and at least one lower limiting value are defined for the setpoint rotational speed of the internal combustion engine (1) on the basis of the actual rotational speed of the traction drive (8) and/or the required rotational speed of the traction drive (8).

## Revendications

1. Chariot élévateur doté d'au moins un moteur à combustion interne (1), d'au moins un dispositif (11) commandant le moteur à combustion interne, d'au moins un générateur (2) entraîné par le moteur à combustion interne (1), d'au moins un élément d'entraînement électrique (7) ainsi que d'au moins un dispositif (9) commandant l'élément d'entraînement électrique ;
au moins un dispositif (13) détectant la charge du moteur à combustion interne (1) ;
**caractérisé en ce que**:
un moyen (24) calcule la vitesse de rotation théorique du moteur à combustion interne (1) à partir de la charge détectée et de la charge théorique du moteur à combustion interne (1) ainsi que de la vitesse de rotation effective et de la vitesse de rotation requise de l'entraînement de roulement (8).

2. Chariot élévateur selon la revendication 1, **caractérisé en ce que** des moyens (17) de comparaison de la charge détectée du moteur à combustion interne (1) et de la charge théorique du moteur à combustion interne (1) sont prévus.

3. Chariot élévateur selon la revendication 1 ou 2, **caractérisé en ce que** les moyens (13) de détection de la charge du moteur à combustion interne (1) comprennent au moins un moyen de détection de la vitesse de rotation du moteur et/ou du couple du moteur de rotation.

4. Chariot élévateur selon l'une quelconque des revendications 1 à 3, **caractérisé en ce que** l'élément d'entraînement électrique (7) est réalisé sous la forme d'un moteur électrique, de préférence sous la forme d'un moteur asynchrone à courant triphasé (7).

5. Chariot élévateur selon l'une quelconque des revendications 1 à 4, **caractérisé en ce que** les moyens (13) de détection de la charge du moteur à combustion interne (1) comprennent au moins un moyen de détection des données de puissance de l'élément d'entraînement électrique, de préférence de détection des grandeurs caractéristiques d'un moteur électrique (7).

6. Chariot élévateur selon l'une quelconque des revendications 1 à 5, **caractérisé en ce que** le moteur électrique (7) fait partie d'un entraînement de roulement (8).

7. Chariot élévateur selon l'une quelconque des revendications 1 à 6, **caractérisé en ce qu'**au moins un dispositif (15) de détection de la vitesse de rotation de l'entraînement de roulement (8) est prévu.

8. Chariot élévateur selon la revendication 7, **caractérisé en ce que** le dispositif (15) de détection de la vitesse de rotation de l'entraînement de roulement (8) est réalisé sous la forme d'un dispositif (15) de détection de la vitesse de rotation du moteur électrique (7).

9. Chariot élévateur selon l'une quelconque des revendications 1 à 8, **caractérisé en ce que** des moyens (19) de comparaison de la vitesse de rotation de l'entraînement de roulement (8) détectée et requise sont prévus.

10. Chariot élévateur selon l'une quelconque des revendications 1 à 9, **caractérisé en ce que** des moyens de détermination de valeurs limites sont prévus pour la vitesse de rotation théorique du moteur à combustion interne en fonction de la vitesse de rotation de l'entraînement de roulement (8) effective et/ou requise.

11. Procédé d'actionnement d'un chariot élévateur présentant les caractéristiques d'une des revendications 1 à 10, **caractérisé en ce que** la charge réelle du moteur à combustion interne (1) est calculée, comparée à la charge théorique et qu'une grandeur caractéristique V est calculée pour l'écart.

12. Procédé selon la revendication 11, **caractérisé en ce que** la vitesse de rotation du moteur d'entraînement en rotation (7) est calculée, comparée à la vitesse de rotation prédéfinie par la commande (9) du moteur d'entraînement en rotation (7) et qu'une grandeur caractéristique E est calculée pour l'écart.

13. Procédé selon la revendication 12, **caractérisé en ce qu'**une grandeur caractéristique X unique est calculée à partir de la grandeur caractéristique V et de la grandeur caractéristique E.

14. Procédé selon la revendication 13, **caractérisé en ce que** la grandeur caractéristique X est formée en multipliant la grandeur caractéristique V et la grandeur caractéristique E respectivement avec un facteur de pondération adapté puis que la différence des ordres de grandeur ainsi produits est calculée.

15. Procédé selon la revendication 13 ou 14, **caractérisé en ce que** la grandeur caractéristique X formée à partir des grandeurs caractéristiques V et E est utilisée sous la forme d'un ordre de grandeur de réglage pour la vitesse de rotation du moteur à combustion interne (1), notamment en présence d'un calcul selon l'algorithme PID.

16. Procédé selon l'une quelconque des revendications 11 à 15, **caractérisé en ce qu'**au moins une valeur limite supérieure ainsi qu'au moins une valeur limite inférieure sont déterminées à l'aide de la vitesse de rotation de l'entraînement de roulement (8) effective et/ou requise pour la vitesse de rotation théorique du moteur à combustion interne (1).
